# EUROPÄISCHE PATENTSCHRIFT

(11) **EP 1 212 657 B1**
(45) Veröffentlichungstag und Bekanntmachung des Hinweises auf die Patenterteilung: **23.11.2005**
(21) Anmeldenummer: 00960213.7
(22) Anmeldetag: 03.09.2000
(51) Int. Cl.: G02F 1/09

(54) **MAGNETOOPTISCHES SCHALTELEMENT MIT EINEM FARADAY-ROTATOR**
MAGNETO-OPTIC SWITCHING ELEMENT COMPRISING A FARADAY ROTATOR
ELEMENT DE COMMUTATION MAGNETO-OPTIQUE POURVU D'UN ROTATEUR DE FARADAY

(30) Priorität: 15.09.1999 AT 158699
(43) Veröffentlichungstag der Anmeldung: 12.06.2002
(73) Patentinhaber: Didosyan, Juri S., 1040 Wien (AT)
(72) Erfinder: Didosyan, Juri S., 1040 Wien (AT)
(74) Vertreter: Laminger, Norbert
(86) Internationale Anmeldenummer: PCT/AT2000/000244
(87) Internationale Veröffentlichungsnummer: WO 2001/020390

(56) Entgegenhaltungen:
- US-A- 3 526 883
- US-A- 4 495 492
- CHETKIN M V ET AL: "MEASUREMENT OF THE VELOCITY OF MOTION OF DOMAIN BOUNDARIES BY A MAGNETOOPTICAL METHOD" INSTRUMENTS AND EXPERIMENTAL TECHNIQUES,CONSULTANTS BUREAU. NEW YORK,US, Bd. 23, Nr. 1, Januar 1980 (1980-01), Seiten 215-218, XP000960418 ISSN: 0020-4412
- GADETSKY S ET AL: "MAGNETO-OPTICAL RECORDING ON PATTERNED SUBSTRATES (INVITED)" JOURNAL OF APPLIED PHYSICS,US,AMERICAN INSTITUTE OF PHYSICS. NEW YORK, Bd. 79, Nr. 8, PART 02B, 15. April 1996 (1996-04-15), Seiten 5687-5692, XP000694924 ISSN: 0021-8979 in der Anmeldung erwähnt
- DIDOSYAN Y S ET AL: "Magneto-optical current sensors of high bandwidth" SECOND EUROPEAN MAGNETIC SENSORS AND ACTUATORS CONFERENCE. EMSA 98, SHEFFIELD, UK, 13-15 JULY 1998, Bd. A81, Nr. 1-3, Seiten 263-267, XP004191302 Sensors and Actuators A (Physical), 1 April 2000, Elsevier, Switzerland ISSN: 0924-4247

## Beschreibung

Die Erfindung betrifft ein magnetooptisches Schaltelement mit einem Faraday-Rotator aus einem magnetisch einachsigen Kristall, wie es beispielsweise in optischen Schaltsystemen, in optischen Netzten der Nachrichtentechnik und der Datenverarbeitung zur Änderung des optischen Pfades eines Lichtstrahles, in optischen Verschlüssen, optischen Dämpfungselementen oder in ortsabhängigen Lichtmodulationssystemen, welche die Intensität von bestimmten Teilstrahlen ändern können, Verwendung findet.

Mechanische optische Schalter, Verschlüsse und dergleichen haben den Vorteil, dass zumeist mit relativ einfachen Mitteln stabile Schaltzustände ohne permanenten Energieverbrauch realisierbar sind. Der Nachteil derartiger mechanischer Schaltelemente ist ihre relativ geringe Schaltgeschwindigkeit, die naturgemäß eine Anwendung in vielen Bereichen der eingangs angesprochenen Art ausschließt.

Entsprechend hohe Schaltgeschwindigkeiten werden beispielsweise durch die bekannten elektro-optischen (siehe z.B. US-PS 5,712,935) oder akusto-optischen Schaltelemente (siehe z.B. US-PS 5,883,734) ermöglicht, die aber wiederum für die Beibehaltung stabiler Schaltzustände eine permanente Energiezufuhr benötigen. Ausnahmen sind hier z.B. Schaltelemente auf Basis des elektro-optischen Effektes mit amorphen Werkstoffen, welche ebenfalls stabile Zustände ohne permanente Energiezufuhr aufweisen (siehe z.B. EP 0 500 402), wobei aber deren Schaltzeit wiederum relativ hoch ist, da die Übergangszeiten zwischen den stabilen Zuständen im ms-Bereich liegen.

Die eingangs angesprochenen bekannten magneto-optischen Schaltelemente bieten hier eine Kompromisslösung. Verglichen mit mechanischen Elementen haben sie keine beweglichen Teile, und damit auch eine entsprechend geringe Empfindlichkeit gegenüber Vibrationen oder Stößen und eine weitaus höhere Schaltgeschwindigkeit, allerdings verbunden mit einer wellenlängenabhängigen Funktion. Verglichen mit schnellen elektro-optischen und akusto-optischen Schaltelementen besitzen sie stationäre Zustände ohne äußere Energiezufuhr, allerdings verbunden mit etwas höheren Schaltzeiten.

Im letzten Zusammenhang ist beispielsweise auf folgende Arbeiten bzw. Veröffentlichungen zu verweisen: M. Shirasaki, H. Nakajima, T. Obokata and K. Asama: Non-mechanical Optical Switch for Single-Mode Fibers, Appl. Opt. 21, 4229 (1982); M Shirasaki, H. Takamatsu and T. Obokata: Bistable Magnetooptic Switch for multimode Optical Fiber, Appl. Opt. 21, 1943 (1982); M. Shirasaki et al: Magnetooptical 2 × 2 switch for single-mode fibers, Appl. Opt. 23, 3271 (1984); M. Shirasaki: Faraday Rotator Assembly, US-Patent 4,609,257 (1986); S. Takeda, Faraday rotator device and optical switch containing same, EP Patent 0 381 117 (1991); M. Shirasaki: Faraday rotator which generates a uniform magnetic field in a magnetic optical element, US-Patent 5,812,304 (1998).

Diese zeigen bistabile magneto-optische Faraday-Rotatoren, welche keine permanente Energiezufuhr erfordern, sondern Energie lediglich für die Umschaltvorgänge zwischen den stabilen Zuständen benötigen. Die Bistabilität basiert dabei auf der magnetischen Hysterese, d.h. auf der Fähigkeit von bestimmten magnetischen Werkstoffen, nach der Aufmagnetisierung in die Sättigung in einem magnetisierten Zustand zu verbleiben. Die in dieser Arbeit verwendeten magneto-optischen (MO) Werkstoffe bestehen aus einer Mischung von Eisengranat. Diese Werkstoffe besitzen keine rechteckige Hystereschleife und bleiben deshalb in Abwesenheit eines äußeren Feldes auch nicht magnetisiert.

Um die Bistabilität zu erzeugen wurde der MO-Werkstoff in das Feld eines Elektromagneten mit einem Kern aus halbhartem magnetischem Werkstoff plaziert (M. Shirasaki et al: Magnetooptical 2 × 2 switch for single-mode fibers, Appl. Opt. 23, 3271. (1984)). Der Kern wird durch den mit bestimmter Polarität durch die Windungen fließenden elektrischen Stromimpuls bis in die Sättigung aufmagnetisiert. Nach Ende des Impulses blieb sowohl der Kern als auch der MO-Werkstoff magnetisiert und es stellte sich eine Rotation der Polarisationsebene des durch den MO-Werkstoff durchgehendes Lichtes ein. Eine Änderung der Strompolarität bewirkt eine Änderung des Rotationssinnes der Polarisationsebene. Beide Zustände sind stabil und das System bleibt darin ohne weitere Energieaufnahme.

Um während der Magnetfeldumkehr, die eine unregelmäßige Polarisationsänderung des austretenden Lichtes hervorruft, eine Domänenwandverschiebung im Rotator zu verhindern, wurde ein zusätzliches Magnetfeld eingebracht (M. Shirasaki: Faraday Rotator Assembly, US-Patent 4,609,257 (1986) und M. Shirasaki: Faraday rotator which generates a uniform magnetic field in a magnetic optical element, US Patent 5,812,304 (1998)). Dieses Feld wird durch einen Magneten erzeugt und hält den Rotator im Eindomänenzustand. Das Magnetfeld des Elektromagneten bewirkt also lediglich Magnetisierungsrotation und beeinflußt nicht die Domänenstruktur.

Ein Nachteil dabei besteht in der langsamen Umschaltung der Magnetisierungsrichtung und insbesondere der Umschaltung des Drehsinnes der Polarisation. Gemäß EP 0 381 117 (1991): "Faraday rotator device and optical switch containing the same" war im Beispiel 2 die Schaltzeit etwa 500ms. Im Artikel von M. Shirasaki et al: "Non-mechanical Optical Switch for Single-Mode Fibers, Appl. Opt. 21, 4229 (1982)" betrug die Schaltzeit etwa 10µs. Diese relativ lange Schaltzeit steht in Zusammenhang mit der großen Induktivität der Spule des Elektromagneten: sie beträgt etwa 7mH. Werden Permanentmagnete und andere Konfigurationen z.B. gemäß US-Patent 5,812,304 verwendet, muß das Feld des Elektromagneten sehr viel höhere Werte besitzen, da für die Magnetisierungsrotation das durch die Permanentmagnete erzeugte Sättigungsfeld erreicht werden muß. Dies führt notwendigerweise zu viel höheren Schaltzeiten als die oben erwähnten 10µs. Ein weiterer Nachteil dieses bekannten Schaltelementes ist seine Größe, die von den Dimensionen des Kernes des Elektromagneten bestimmt ist. Weiters ist kein multistabiler Betrieb des Rotators möglich.

Aufgabe der vorliegenden Erfindung ist es, die erwähnten Nachteile der beschriebenen bekannten magneto-optischen Schaltelemente der eingangs genannten Art zu vermeiden und insbesonders die Schaltzeiten, die erforderliche Schaltenergie und die Gesamtdimensionen des Schaltelementes zu verringern sowie in vorteilhafter Weise auch einen multistabilen Betrieb mit mehreren Schaltzuständen zu ermöglichen.

Diese Aufgabe wird gemäß der vorliegenden Erfindung bei einem magneto-optischen Schaltelement der eingangs genannten Art dadurch gelöst, dass der Rotator in jedem seiner ohne angelegtes äußeres Magnetfeld stabilen Zustände magnetische Domänen beider Orientierungen aufweist, deren Wände zur Umschaltung in einen anderen stabilen Zustand durch Anlegen eines äußeren Magnetfeldes ohne Erzeugung zusätzlicher Domänen bewegbar sind. Das damit gegebene Schaltelement kann auf einfache Weise verschiedene stabile Zustände besitzen, in denen es unbefristet ohne Energieaufnahme verbleiben kann. Der Übergang zwischen diesen stabilen Schaltzuständen erfolgt im Nanosekundenbereich, wobei nur geringe optische Verluste im Infrarotbereich auftreten, sehr wenig Umschaltenergie benötigt wird und insgesamt sehr kleine Dimensionen eingehalten werden können.

Bekannt sind magneto-optische Werkstoffe mit rechteckiger Hystereschleife, das heißt, diese Werkstoffe bleiben in Abwesenheit eines äußeren Magnetfeldes magnetisiert. Orthoferrite sind beispielsweise Vertreter dieser Werkstoffgruppe. Orthoferrite sind schwache Ferromagnete, die durch eine geringe resultierende Magnetisierung und eine sehr hohe uniaxiale magnetische Anisotropie gekennzeichnet sind. Orthoferrite sind optische biaxiale Kristalle. Große Winkel der Faraday-Rotation können nur in Abwesenheit von kristalliner Doppelbrechung realisiert werden, das heißt, wenn sich das Licht entlang der optischen Achsen des Kristalls fortpflanzt. In diesem Fall entstehen hohe Leistungszahlwerte FM, das ist das Verhältnis der Faraday-Rotation zur Absorption. Im sichtbaren Bereich und einem Teil nahe dem Infrarotbereich (inklusive der für die optische Nachrichtentechnik wichtige Wellenlänge von 1,55µm) besitzen Orthoferrite die besten FM-Werte von allen magneto-optischen Kristallen. Ein wichtiger Vorteil von Orthoferriten verglichen mit anderen magnetischen Werkstoffen ist die extrem hohe Domänenwandgeschwindigkeit von 20 km/s.

Die hohe Koerzitivfeldstärke von Orthoferriten ist ein wichtiger Vorteil im optischen Isolationsmodus. In dynamischen Anwendungen in der Entwicklung von optischen Schaltern, Verschlüssen, ortsauflösenden Lichtmodulatoren, optischen Dämpfern, etc., ist die hohe Koerzifivfeldstärke jedoch ein Nachteil, da sie hohe Feldstärken erfordert. Die hohen Koerzitivfeldstärken entstehen durch die Notwendigkeit von gegengleich magnetisierten Domänen. Bei Magnetisierung bis in die Sättigung, sind jeweils die stabilen Zustände des Rotators erreicht, wobei nur mehr eine einzige Domäne vorliegt und keine Domänen mit entgegengesetzter Orientierung. Um die gegengerichteten Domänen umzudrehen, sind hohe Magnetfelder erforderlich - darüber hinaus existieren nur zwei stabile Zustände (gemäß den zwei Richtungen der Sättigungsmagnetisierung) die sich nach Abschaltung des externen Magnetfeldes nicht ändern.

Die Arbeitsweise des Rotators wird gemäß der Erfindung nun insofern verbessert, als in den sich nach Abschaltung des externen Magnetfeldes nicht ändernden stabilen Zuständen des Rotators bereits Domänen beider Orientierungen (also zumindest zwei Domänen mit unterschiedlicher Orientierung) vorhanden sind. Die Existenz beider Domänenausrichtungen löst die Probleme ihrer Erzeugung und führt zu geringeren notwendigen äußeren Magnetfeldern bzw. zur Reduktion der Schaltzeiten. Um dies zu erreichen werden gemäß einer vorteilhaften Ausgestaltung dieser Erfindung Inhomogenitäten bzw. Gitterabweichungen in den Rotator eingebaut.

Derartige Inhomogenitäten wurden in anderem Zusammenhang bereits zur Entwicklung von magneto-optischen Speichern verwendet. In den Arbeiten von Te-Ho Wu et al, Magnetic domain pinning in patterned magneto-optical material. J. Appl.Phys 85, 5980-5982 (1999); S. Gadetsky, J.K. Erwin, M. Mansuripur and T. Suzuki, Magneto-optical recording on patterned substrates, J. Appl. Phys. 79, 5687 (1996) wurden die Substrate, auf denen ein dünner Film aus magneto-optischem Werkstoff angebracht wurde, strukturiert. Die Kanten der resultierenden Struktur wurden als Begrenzung der Domänen genutzt. Gemäß RU 2 029 978 C1 werden Inhomogenitäten in Form von Vertiefungen mit flachem Boden in magneto-optischem Filmmaterial zur Erhaltung von Einzeldomänen-Bereichen verwendet. In beiden Fällen wurden einzelne Domänen in bestimmten Bereichen dadurch bereitgestellt, daß die Dicke eines Trägermaterials, auf dem der magnetooptische Film aufgebracht ist oder die Dicke des magnetooptischen Films selbst variiert wird. Derartiges ist mit kristallinen Festkörpern nicht möglich, da es praktisch unmöglich ist, Vertiefungen mit Dimensionen von Bruchteilen von Millimetern mit ebenem Boden in optischer Qualität an einem Kristall herzustellen. Darüber hinaus wird in allen genannten Fällen zur Umschaltung der Domänenorientierung wiederum als erstes die Erzeugung von entgegengesetzt orientieren Domänen notwendig, so daß die oben stehend beschriebenen Nachteile der erforderlichen, relativen starken Magnetfelder auch hier wiederum bestehen bleiben.

In DE 28 39 216 A1 ist ein magnetooptischer Modulator beschrieben, bei dem zur Einleitung der Umschaltung keine Erzeugung von Domänen der jeweils entgegengerichteten Orientierung erforderlich ist. Ein magnetisch einachsiger magnetooptischer Film ist in inselartige Bereiche geteilt, welche magnetisch voneinander separiert sind. Jede Insel enthält mehrere Domänen mit unterschiedlichen Orientierungen. Zufolge der fehlenden magnetischen Einwirkung zwischen den Inseln kann jede davon leicht separat durch Magnetfelder von kleinen Spulen magnetisiert werden, welche direkt auf die jeweilige Insel einwirken. Da in Abwesenheit externer magnetischer Felder die einzelnen Inseln demagnetisiert sind, besteht der Magnetisierungsvorgang in einer Bewegung der Domänenwände. Bei der gegebenen Anordnung bedeutet dies allerdings ein Fehlen von stabilen Zuständen im eigentlichen Sinne, in denen der Rotator ohne externes magnetisches Feld verbleibt - wenn das externe Feld abgeschaltet wird, werden die Ausdehnungen der entgegengesetzt magnetisierten Domänen einander gleich, womit die insgesamte Faraday-Rotation dieser Insel null wird.

Gemäß der vorliegenden Erfindung ist demgegenüber Hauptaufgabe der angesprochenen Inhomogenitäten darin zu sehen, die Domänenwände der existierenden Domänen an den vorgegebenen Stellen zu fixieren, womit beim Umschalten lediglich existierende Domänenwände bewegt werden müssen und nicht auch noch zusätzlich eine anfängliche Erzeugung von Domänen mit dem jeweils entgegengesetzten Vorzeichen notwendig ist. Die Inhomogenitäten gemäß der vorliegenden Erfindung sind damit auch nur an den Stellen erforderlich, wo Domänenwände nach dem Abschalten des äußeren Magnetfeldes verbleiben sollen (entsprechend den gewünschten stabilen Zuständen des Rotators) und nicht im gesamten Bereich der von den vorliegenden Domänen bedeckt wird, wie dies oben zum Stand der Technik beschrieben war.

Die Inhomogenitäten bestehen z.B. aus schmalen Ritzen an der Oberfläche des Kristalls. Die Ritzen stellen neue lokale Minima der magnetischen Energie dar und befestigen die Domänenwände. Damit wird die Domänenstruktur bei abgeschaltetem externen Magnetfeld im gegebenen Zustand gehalten. In Abhängigkeit von der Tiefe der Ritzen wird die Koerzitivfeldstärke, d.h. das erforderliche Magnetfeld zur Entfernung der Domänen aus den Ritzen, der gegebenen Domänenstruktur reguliert. Bringt man verschiedene Sets von Ritzen, bzw. allgemein Gitterabweichungen, an der Probe an, können unterschiedliche Fixierungspunkte der Domänenwände erzeugt werden und somit verschiedene stabile Zustände des Rotators bzw. Schaltelementes.

Weitere Merkmale und Vorteile der Erfindung werden im folgenden speziell auch anhand der teilweise schematischen Zeichnungen erläutert. Fig. 1 zeigt dabei ein multistabiles Schaltelement gemäß der vorliegenden Erfindung, Fig. 2 einen multistabilen Rotator mit Permanentmagneten zur Verwendung in einem Schaltelement gemäß der vorliegenden Erfindung, Fig. 3 ein multistabiles Schaltelement gemäß der vorliegenden Erfindung als optischer Schalter und Fig. 4 ein entsprechendes Schaltelement gemäß der Erfindung zur Verwendung als optischer Verschluß.

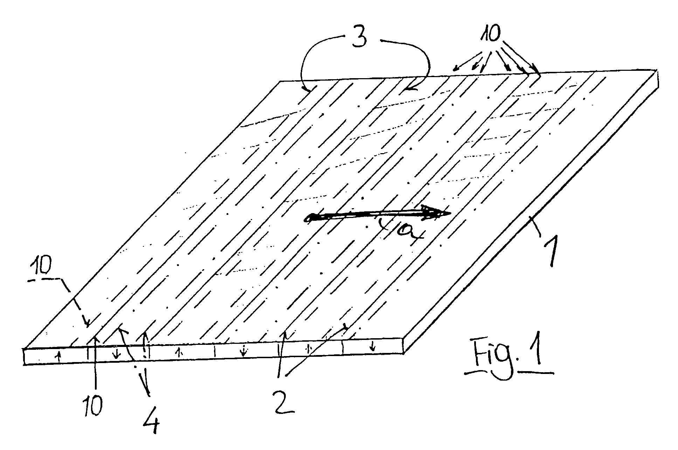

Fig. 1 zeigt als schematisches Beispiel einer Ausführung der Erfindung einen Rotator mit einem Orthoferrit-Kristallplättchen 1 mit drei Sets 2, 3, 4 von oberflächlichen Ritzen 10 als Gitterabweichung. Das Kristallplättchen 1 ist senkrecht zur optischen Achse geschnitten - der Pfeil a zeigt die Richtung der kristallografischen a-Achse. Eines der Sets 2 korreliert mit dem Gleichgewichtszustand der Domänen. Die Abstände zwischen den Ritzen 10 sind gleich groß und entsprechen den Gleichgewichtsbreiten der Domänen im Plättchen. Ein anderes Set 3 korrespondiert mit dem Zustand der partiellen (positiven) Magnetisierung des Plättchens. Dieses Set besteht also aus Ritzen 10 in verschiedenen Abständen auf alternierenden Seiten zu den Ritzen 10 des Sets 2. Zur Änderung der Domänenstruktur wird ein gepulstes externes Magnetfeld angelegt. Während der Pulse vergrößern sich die in Richtung des angelegten Magnetfeldes orientierten Domänen auf Kosten der entgegengesetzt orientierten. Ist die Amplitude und die Dauer des Impulses genügend groß, erreichen die Domänenwände die Ritzen 10 des Sets 3, welche die Domänenwände fixieren: nach Ende des Impulses verbleiben sie an diesen Positionen, der Rotator befindet sich in einem stabilen Zustand. Um in den ursprünglichen Zustand zurückzukehren, muß ein Magnetimpuls entgegengesetzter Richtung angelegt werden. Analog zum Set 3 kann ein entgegengesetztes Set 4. erzeugt werden. Damit stellt sich ein weiterer stabiler Zustand ein. Auf diese Weise können unterschiedliche Sets von Ritzen 10 in verschiedenen Abständen zum Set 2 angebracht und damit eine große Anzahl von stabilen Zuständen des Schalters definiert werden.

Die Amplitude und Zeitdauer des Magnetfeldimpulses wird in Abhängigkeit der Abstände zwischen den Ritzen 10 gewählt. Ist die Amplitude zu klein oder die Zeitdauer zur kurz, können die Domänenwände das nächste Ritzenset nicht erreichen und sie bewegen sich nach Ende des Impulses in ihre Anfangsposition zurück. Ist die Amplitude zu groß oder die Zeitdauer zu lang, wandern die Domänenwände weiter als benötigt und bewegen sich nach Ende des Impulses zu den Ritzen zurück.

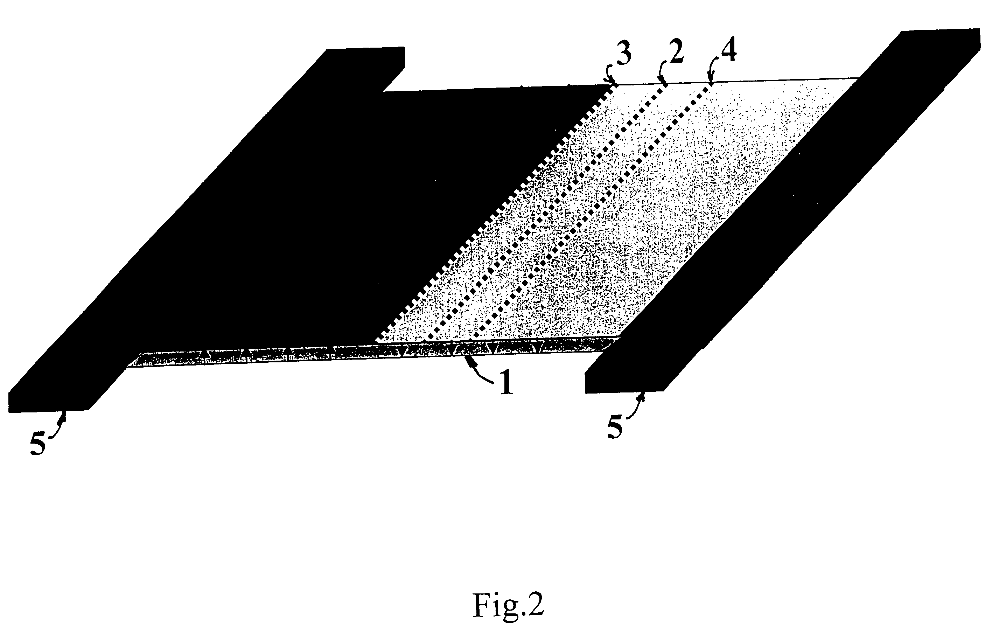

In einer anderen Ausführung der Erfindung gemäß Fig. 2 sind die zur Fixierung der Domänen angebrachten Ritzen mit einem inhomogenen Magnetfeld kombiniert. Dieses Feld wird durch Permanentmagnete (5) erzeugt und zur Fixierung der Domänenstruktur genutzt. Auf diese Weise werden die Ausführungen und die dynamischen Eigenschaften des Rotators erweitert. Die Geschwindigkeit der Domänenwandbewegung vergrößert sich mit einer Erhöhung des Magnetfeldes (in einer weiten Bandbreite von Geschwindigkeit besteht Proportionalität zwischen diesen Werten). Je kürzer die Schaltzeiten sein sollen, desto höher muß der Magnetfeldimpuls sein. Zu hohe Magnetfelder können jedoch irreversible Domänenverschiebungen hervorrufen, wie z.B. die Erzeugung neuer Domänen. Das Aufbringen eines gradientenförmigen Magnetfeldes stabilisiert die Domänenwände und begrenzt deren Beweglichkeit. Das Gradientenfeld wird durch zwei Paare von kleinen Permanentmagneten erzeugt. Das von jedem Paar erzeugte Magnetfeld hat entgegengesetzte Polarität und der Rotator wird in zwei Domänen unterteilt. In Abwesenheit von anderen Magnetfeldern befindet sich die Domänenwand an der Stelle, wo das Gradientenfeld den Nulldurchgang (Null-Feldlinie) besitzt: ein stabiler Zustand (entsprechend Set 2 in Fig 1) des Schalters. Beidseitig dieser Linie werden die Ritzen angebracht. Sie repräsentieren gerade Linien parallel zur Null-Feldlinie. Unter Einwirkung eines Magnetfeldimpulses erreicht die Domänenwand eine bestimmte Ritze. Ist die Befestigung stark genug, bleibt die Domänenwand an dieser Ritze nach Ende des Impulses hängen. Es entstehen daher stabile Zustände, korrespondierend zu den Sets von Ritzen.

In einer großen Bandbreite des externen Magnetfeldes ist der absolute Wert der Rotation der Polarisationsebene in den Domänen von der Größe des Magnetfeldes unabhängig. Daher ist die Funktion des Rotators durch die Inhomogenität äußerer Magnetfelder unbeeinträchtigt.

Die Änderungen der Domänenstruktur zwischen den stabilen Zuständen haben einen regelmäßigen Charakter. Sie bestehen in der Verschiebung der Domänenwände und verursachen keine ungewünschten Lichtschwankungen.

Die kürzesten Schaltzeiten des Rotators sind hauptsächlich von der Minimaldauer der einzelnen Magnetfeldpulse limitiert; sie liegen im ns-Bereich.

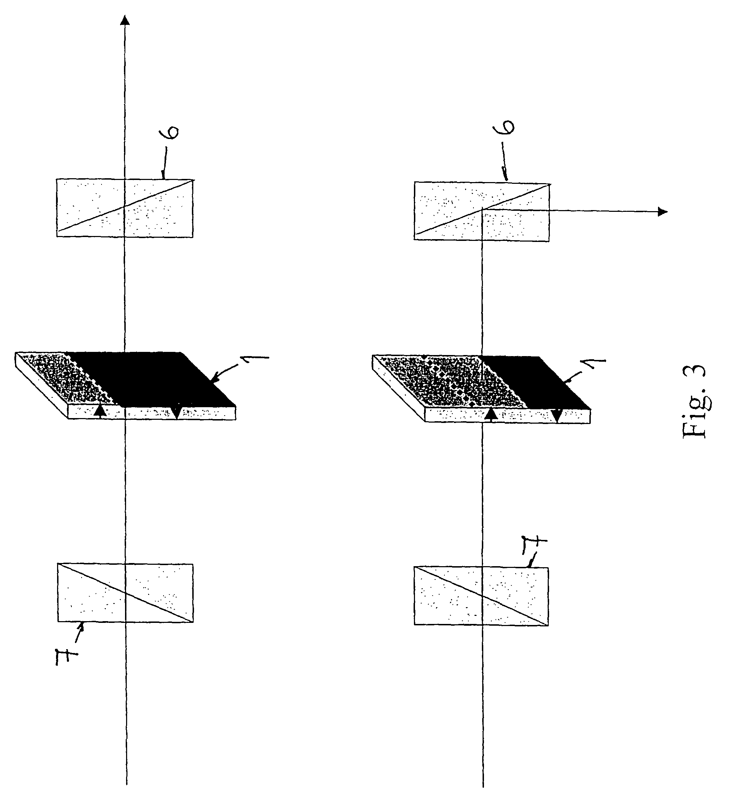

Fig. 3 zeigt ein Schalterschema, das auf einem multistabilen optischen Rotator basiert. Die Dicke des Orthoferritplättchens 1 ist derart gewählt, dass die Polarisationsebene des vorerst durch einen Polarisator 7 durchtretenden Lichtes um 45° gedreht wird. Das Vorzeichen der Rotation hängt von der Domäne ab, durch die das Licht durchgeht. Geht das Licht durch die Domäne, deren Magnetisierung antiparallel zur Durchgangsrichtung des Lichtes ist, erfolgt eine Drehung im Uhrzeigersinn. Nach Durchgang durch ein Polarisationstrennelement (6) pflanzt sich das Licht in horizontaler Richtung fort. Geht das Licht durch die entgegengesetzte magnetisierte Domäne, dreht sich die Polarisationsebene um - 45° und nach dem Durchgang durch ein Polarisationstrennelement (6) pflanzt sich das Licht in vertikaler Richtung fort.

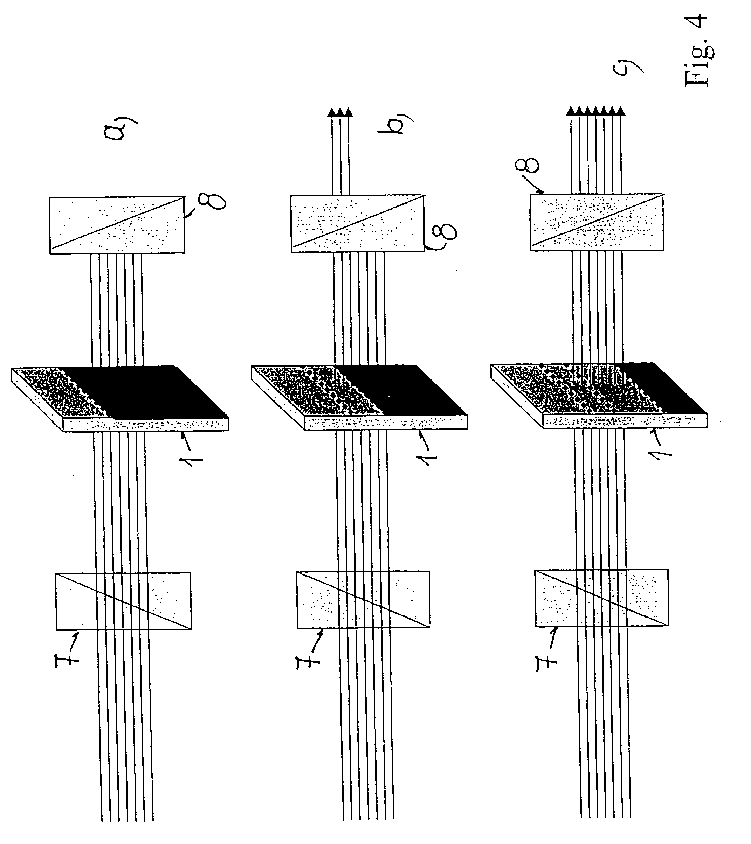

Fig. 4 zeigt das Schema eines optischen Verschlusses, basierend auf dem multistabilen Rotator. Im Falle a) wird der polarisierte Lichtstrahl durch den Analysator (8) gelöscht. Im Falle b) geht ein Teil des Lichtstrahls durch den Analysator 8, nämlich genau der Teil, der durch die parallel zur Durchgangsrichtung des Lichtes magnetisierte Domäne durchgegangen ist. Im Fall c) wird der ganze Lichtstrahl durch den Analysator 8 durchgelassen.

Wie eingangs bereits angesprochen, können anstelle der oberflächlichen Ritzen im Kristall des Rotators zur Stabilisierung der Domänen auch andere Gitterabweichungen vorgesehen werden, beispielsweise im Kristallinneren vorgesehene Hohlräume, Fremdeinschlüsse oder dergleichen oder aber auch bereichsweise Dotierungsänderungen. Anstelle von sich linear über den Kristall erstreckenden derartigen Gitterabweichungen kann auch mit anderen Formen bzw. Ausbildungen derartiger Gitterabweichungen gearbeitet werden - möglich sind auch abgegrenzte Bereiche, unterbrochene Linien usw., wobei lediglich sichergestellt sein muß, dass diese Bereiche geeignet sind, die Domänenwände nach dem Abschalten eines äußeren Magnetfeldes daran zu fixieren. Solange auch in dem damit gegebenen stabilen Zustand des magneto-optischen Schaltelementes magnetische Domänen beider Vorzeichen im Rotatorkristall bestehen bleiben, bleiben auch die sonst erwähnten Vorteile der Erfindung voll erhalten.

## Patentansprüche

1. Magnetooptisches Schaltelement mit einem Faraday-Rotator aus einem magnetisch einachsigen Kristall, **dadurch gekennzeichnet, daß** der Rotator in jedem seiner ohne angelegtes äußeres Magnetfeld stabilen Zustände magnetische Domänen beider Orientierungen aufweist, deren Wände zur Umschaltung in einen anderen stabilen Zustand durch Anlegen eines äußeren Magnetfeldes ohne Erzeugung zusätzlicher Domänen bewegbar sind.

2. Schaltelement nach Anspruch 1, **dadurch gekennzeichnet, dass** zur Stabilisierung der Domänen bei Abwesenheit eines äußeren Magnetfeldes Gitterabweichungen des Kristalls vorgesehen sind, um die Domänenwände daran zu fixieren.

3. Schaltelement nach Anspruch 2, **dadurch gekennzeichnet, dass** die Gitterabweichungen von oberflächlichen Kratzern, Rillen, Nuten od. dgl. auf dem Kristall gebildet sind.

4. Schaltelement nach Anspruch 2, **dadurch gekennzeichnet, dass** die Gitterabweichungen von im Kristallinneren vorgesehenen Hohlräumen, Bohrungen, Fremdeinschlüssen od. dgl. gebildet sind.

5. Schaltelement nach Anspruch 2, **dadurch gekennzeichnet, dass** die Gitterabweichungen durch bereichsweise Dotierungen oder Dotierungsänderungen des Kristalls gebildet sind.

6. Schaltelement nach einem oder mehreren der Ansprüche 2 bis 5, **dadurch gekennzeichnet, dass** beiderseits der Domänenwände in bestimmten Abständen mehrere Gitterabweichungen entsprechend mehreren stabilen Schaltstellungen des Kristalls vorgesehen sind.

7. Schaltelement nach einem oder mehreren der Ansprüche 2 bis 6, **dadurch gekennzeichnet, dass** der Kristall ein im wesentlichen senkrecht zur optischen Achse geschnittener und mit dieser im wesentlichen parallel zur Richtung des durchtretenden Lichtstrahles angeordneter Orthoferrit ist.

8. Schaltelement nach Anspruch 7, **dadurch gekennzeichnet, dass** die Gitterabweichungen sich im wesentlichen linear und zumindest annähernd senkrecht zur kristallographischen a-Achse über den Kristall erstrecken.

9. Schaltelement nach einem oder mehreren der Ansprüche 1 bis 8, **dadurch gekennzeichnet, dass** ein magnetisches Gradientenfeld mit Nulldurchgang im Kristallbereich permanent an den Kristall angelegt ist, vorzugsweise mittels zumindest eines Paares von Permanentmagneten.

10. Verwendung eines Schaltelementes nach einem oder mehreren der Ansprüche 1 bis 9 als multistabiler optischer Schalter, Verschluß, Modulator oder Abschwächer.

## Claims

1. A magneto-optical switching element with a Faraday rotator from a magnetically uniaxial crystal, **characterised in that** the rotator features magnetic domains of both orientations in each of its stable states without the imposition of an external magnetic field, the walls of said domains being capable of movement for switching into another stable state by the imposition of an external magnetic field without the creation of additional domains.

2. The switching element according to Claim 1, **characterised in that**, for the stabilization of domains in the absence of an external magnetic force, lattice deviations of the crystal are provided for, in order to fix the domain walls thereto.

3. The switching element according to Claim 2, **characterised in that** the lattice deviations are formed from surface scratches, grooves, slots, or the like on the crystal.

4. The switching element according to Claim 2, **characterised in that** the lattice deviations are formed from cavities, drillholes, foreign inclusions and the like in the interior of the crystal.

5. The switching element according to Claim 2, **characterised in that** the lattice deviations are formed by doping the crystal area by area or by doping changes of the crystal.

6. The switching element according to one or more of Claims 2 to 5, **characterised in that** on both sides of the domain walls several lattice deviations are provided at given intervals, corresponding to several stable states of the crystal.

7. The switching element according to one or more of Claims 2 to 6, **characterised in that** the crystal is cut essentially perpendicular to the optical axis, and is orthoferrite arranged essentially parallel with this to the direction of the penetrating light beam.

8. The switching element according to Claim 7, **characterised in that** the lattice deviations extend essentially linear and at least approximately perpendicular to the crystallographic a-axis of the crystal.

9. The switching element according to one or more of Claims 1 to 8, **characterised in that** a magnetic gradient field which passes through zero in the area of the crystal is permanently imposed on the crystal, for preference by means of at least a pair of permanent magnets.

10. The use of a switching element according to one or more of Claims 1 to 9 as multistable optical switch, shutter, modulator, or attenuator.

## Revendications

1. Elément de commutation magnéto-optique, avec un rotateur de Faraday composé d'un cristal magnétiquement monoaxial, **caractérisé en ce que** le rotateur, en chacun de ses états stables, sans application de champ magnétique extérieur, présente des domaines magnétiques des deux orientations, dont les parois sont déplaçables pour commutation en un autre état stable, par application d'un champ magnétique extérieur, sans génération de domaines supplémentaires.

2. Elément de commutation selon la revendication 1, **caractérisé en ce que**, pour la stabilisation des domaines, en cas d'absence d'un champ magnétique extérieur, sont prévus des écarts de réseau du cristal, pour fixer sur eux les parois de domaines.

3. Elément de commutation selon la revendication 2, **caractérisé en ce que** les écarts de réseau sont formés d'éraflures, de cannelures, de rainures ou analogues de surface, sur le cristal.

4. Elément de commutation selon la revendication 2, **caractérisé en ce que** les écarts de réseau sont formés d'espaces creux, de perçages, d'inclusions étrangères ou analogues, prévus à l'intérieur du cristal.

5. Elément de commutation selon la revendication 2, **caractérisé en ce que** les écarts de réseau sont formés par des dopages ou des modifications de dopage, effectué(e)s par zones, du cristal.

6. Elément de commutation selon l'une ou plusieurs des revendications 2 à 5, **caractérisé en ce que**, de part et d'autre des parois de domaines, selon des espacements déterminés, sont prévus une pluralité d'écarts de réseau, correspondant à une pluralité de positions de commutation stables du cristal.

7. Elément de commutation selon l'une ou plusieurs des revendications 2 à 6, **caractérisé en ce que** le cristal est une orthoferrite, coupée sensiblement perpendiculairement à l'axe optique et disposée avec celui-ci sensiblement parallèlement à la direction du faisceau de lumière traversant.

8. Elément de commutation selon la revendication 7, **caractérisé en ce que** les écarts de réseau s'étendent sensiblement de façon linéaire et au moins à peu près perpendiculairement à l'axe cristallographique a, sur le cristal.

9. Elément de commutation selon l'une ou plusieurs des revendications 1 à 8, **caractérisé en ce qu'**un champ de gradient magnétique, comprenant un passage à zéro dans la zone de cristal, est appliqué en permanence au cristal, de préférence au moyen d'au moins une paire d'aimants permanents.

10. Utilisation d'un élément de commutation selon l'une ou plusieurs des revendications 1 à 9, en tant que commutateur, obturateur, modulateur ou affaiblisseur optique multistable.
